Europäisches Patentamt

European Patent Office

Office européen des brevets

(19)

(11) Veröffentlichungsnummer: **0 129 183**
**B1**

(12) # EUROPÄISCHE PATENTSCHRIFT

(45) Veröffentlichungstag der Patentschrift:
**24.08.88**

(51) Int. Cl.⁴: **B 60 C 9/02,** B 29 D 30/38

(21) Anmeldenummer: **84106661.6**

(22) Anmeldetag: **12.06.84**

(54) **Verfahren zur Herstellung eines Reifens mit verstärktem Wulst.**

(30) Priorität: **21.06.83 DE 3322266**

(43) Veröffentlichungstag der Anmeldung:
**27.12.84 Patentblatt 84/52**

(45) Bekanntmachung des Hinweises auf die Patenterteilung:
**24.08.88 Patentblatt 88/34**

(84) Benannte Vertragsstaaten:
**DE FR**

(56) Entgegenhaltungen:
**EP - A - 0 009 018**
**DE - A - 2 513 782**
**FR - A - 1 161 340**
**FR - A - 1 163 553**
**FR - A - 2 132 509**
**FR - A - 2 141 834**

(73) Patentinhaber: **BAYER AG, Konzernverwaltung RP**
**Patentabteilung, D-5090 Leverkusen 1 Bayerwerk (DE)**

(72) Erfinder: **Knipp, Ulrich, Dr., Haberlandstrasse 3,**
**D-5060 Bergisch-Gladbach 2 (DE)**
Erfinder: **Ganster, Otto, Dr., Berliner Strasse 64,**
**D-5090 Leverkusen 1 (DE)**

**Beschreibung**

Die Erfindung betrifft ein Verfahren zur Herstellung eines mit ummantelten Cordfäden armierten Giessreifens, bei dem zunächst die Reifenarmierung vorgefertigt wird, indem ein Endloscordfaden changierend auf einen Kern gewickelt wird, wobei die Changierung so gesteuert wird, dass in den Wendepunkten der Changierung der Endloscordfaden eine Zeitlang im Bereich des Reifenfusses rotationssymmetrisch geführt wird.

In GB-A-562 137 ist ein Reifen beschrieben, bei dem ummantelte Cordfäden zur Verstärkung in eine Gummikarkasse eingearbeitet sind. Die Cordfäden sind um den Wulst gelegt. Eine Anregung, wie ein mit ummanteltem Cord als Armierung ausgerüsteter Giessreifen rationell hergestellt werden könnte, ist dieser Schrift nicht zu entnehmen.

In DE-A-1 605 684 ist ein Kunststoffluftreifen für höchste Innendrücke aus Polyurethanelastomeren beschrieben, der mit Hilfe einer Form und eines Formkernringes im Giessverfahren hergestellt ist und Verstärkungseinlagen aufweist, wobei die Verstärkungseinlage als den Formkern teilweise Umhüllende ausgebildet ist und durch eine Distanzschicht dafür gesorgt ist, dass die Windungen der Verstärkungseinlage einen Abstand von der inneren Fläche des Reifens haben und damit von dem Elastomer vollkommen umhüllt sind. Bei diesem Reifen berührt der Verstärkungsfaden den Reifenfuss nur an einer Stelle. Der Reifenfuss ist bei diesem Reifen eine Schwachstelle. Wulst- und Laufflächenarmierung sind nicht ausreichend. Es ist nicht bekannt, wie die Armierung kraftschlüssig mit einem eventuell vorhandenen Wulstrand verbunden werden könnte. Gemäss DE-A-1 605 684 ist überhaupt kein Wulstrand vorhanden. Bei starker Beanspruchung versagt dieser Reifen zuerst im Reifenfuss.

Gemäss der gattungsbildenden FR-A-2 132 509 ist ein Reifen mit einer aus ummanteltem Cord gebildeten Armierung bekannt, wobei ein endloser Cordfaden diagonal über die Lauffläche alternierend von einem Reifenfuss zum anderen verläuft und dabei eine längere Strecke im Reifenfuss geführt ist. Die Herstellung dieses Reifens erfolgt in der Weise, dass zunächst die Reifenarmierung vorgefertigt wird, indem ein endloser Cordfaden changierend auf einen Kern gewickelt wird und wobei die Changierung so gesteuert wird, dass in den Extremstellungen der Changierung, d.h. in den Wulstbereichen des Reifens, der Cordfaden eine Zeitlang rotationssymmetrisch im Bereich des Reifenfusses gehalten wird.

Aufgabe der Erfindung ist es, das zuletzt beschriebene Verfahren in wirtschaftlicher Weise so zu verbessern, dass die Ausbildung der Armierung im Reifenfuss optimiert wird.

Die Aufgabe wird durch folgende Verfahrensschritte gelöst:

a) der Endloscordfaden wird auf einen rotierenden Kern mit sich nicht verengenden Flanken gewickelt;

b1) entweder wird der umwickelte Kern zur Kerninnenkonturbildung des Giessreifens verwendet, oder

b2) die Reifenarmierung wird nach einer Fixierung von dem Kern abgenommen und in eine Reifengiessform eingelegt;

c) die Changierung wird so gesteuert, dass wenigstens einmal auf jeder Seite in den Wendepunkten der Changierung der Endloscordfaden mindestens eine Umdrehung lang an einen rotationssymmetrisch im Bereich des Reifenfusses am Kern angebrachten Wulst gedrückt wird.

Dadurch wird erreicht, dass sich die Armierung im Reifenfuss stärker und gleichmässiger ausbildet, höhere Kraftaufnahmefähigkeit besitzt und insbesondere ohne weitere zusätzliche Massnahmen durchführbar ist. Der festere Wulst ist durch die Wickeltechnik automatisch mit der Armierung der Lauffläche und der Reifenseitenwände verbunden. Die Reifenstabilität ist dadurch überall sehr gleichmässig hoch und auch der Reifenfuss behält die vorgegebenen Dimensionen. Ein unerwünschtes Reifenwachstum im Wulst ist ausgeschlossen. Mit «Endloscordfaden» soll nicht ein einziger in sich geschlossener Faden bezeichnet werden. Selbst wenn mehrere Fadenstücke zum Aufbau der Armierung verwendet werden, entstehen so wenige Schwachstellen, dass keine gesonderte Vorsorge für die Fadenenden getroffen werden muss. Sie sollten bevorzugt im Wulstbereich liegen. Diese lokalen Schwachstellen sind nicht vergleichbar mit den Anfängen und Enden von Cordgeweben oder Vliesen. Der Endloscordfaden sorgt auch für ein hohes Mass an Gleichförmigkeit. Bei Cordgewebeeinlagen ist die Gleichmässigkeit durch Überlappungen oder Faltenbildung immer mehr oder weniger beeinträchtigt.

Es ist wichtig, bei diesen Reifen ummantelte Endloscordfäden einzusetzen. Dadurch wird einerseits erreicht, dass aufeinanderliegende Fäden, wie sie zumindest im Reifenfuss auftreten, nicht unmittelbar mit einer Seele aneinanderscheuern, was die Lebensdauer ganz erheblich herabsetzt; und es wird ausserdem ein erwünschter Abstand des eigentlichen Verstärkungsdrahtes, der aus Metall oder anorganischen oder organischen Fasern, z.B. Stahl, Glas, Baumwolle, Polyester, Polyamid, Kohlenstoff, Aramid, besteht, von der Oberfläche des Reifens erreicht. Material und Dicke der Ummantelung des Cordes sind weitere Freiheitsgrade, um die Reifeneigenschaften zu optimieren. Bevorzugt ist eine Ummantelung mit Kunststoff oder Gummi, wobei noch Mittel zur Haftverbesserung aufgebracht werden können. Die Dicke der Ummantelung liegt bevorzugt im Bereich 0,1 bis 1,0 mm; eine Lackierung oder eine Extrusionsummantelung sind bevorzugt.

Es ist möglich, durch entsprechende Stellung der Changierbewegung und der Kernrotation verschiedene Muster der Cordarmierung auf dem Kern zu erzeugen; es kann auch der Abstand der Drähte voneinander genau eingestellt werden. Es kann ein «Maschenmuster» aus gleichmässiger Löcherverteilung erzeugt werden. Zumindest bei einer «lockeren» Armierung ist eine Fixierung notwendig, wenn der Kern, durch den sie erzeugt worden ist, nicht zugleich auch als Reifeninnenkontur in der Giessform verwendet werden soll. Zur Fixierung kann von einem entsprechend klebrigen Cordfaden ausgegangen werden; die Armierung kann auch nachträglich verklebt werden; sie kann auch mit einem klebenden Netz oder Vlies abgedeckt werden, was die Armierung nach der Abtrocknung hinreichend stabilisiert. Wenn der Kern beim Giessen weiterverwendet wird, ist der Cordfaden normalerweise so fest aufgewikkelt, dass eine besondere Fixierung entfallen kann.

Es hat sich auch bewährt, die Fäden dicht aneinanderliegend diagonal über die Lauffläche zu führen, was auch zu einer Stabilisierung des Kerns beiträgt. Der gewünschte Abstand der «Seelen» des Cordes wird dabei durch die Ummantelung eingestellt. Auch bei einer solchen dichten Wickelung ist ein Giessen möglich, da die bevorzugten PUR-Giesssysteme mit niedriger Viskosität eingestellt werden können.

Als Folge einer präzisen Kernarmierung ohne Schwachstellen lässt sich ein relativ leichter Reifen mit hervorragenden Eigenschaften erzeugen. Es ist zwar ein genauer Kern erforderlich, der zudem einen Wulst aufweisen muss, andererseits lässt sich aber auch Material einsparen, weil auf Sicherheitszuschläge verzichtet werden kann.

Es ist nicht entscheidend, wie der Kern zerlegt werden kann. Der Kern kann ein elastischer Balg sein, der durch Druckbeaufschlagung mit Luft oder bevorzugt mit einer Flüssigkeit seine Stabilität erhält; solche Bälge sind beispielsweise beschrieben in der DE-A 22 05 220, DE-A 21 24 978, DE-A 30 42 576 oder US-A 3 712 362. Auch teilbare Metallkerne sind geeignet. Eine Einschränkung hinsichtlich der Form des Kernes ist, dass sich die Flanken nicht verengen dürfen; d.h. der Fussbereich des Kernes, also dort, wo der erforderliche Wulst angebracht ist, muss mindestens so breit sein wie die Lauffläche, weil sonst die durch das neue Verfahren erzielte Armierung mit einfachen Mitteln nicht rationell herzustellen ist. Das schliesst nicht aus, dass eine solche Armierung in eine Reifenform eingelegt werden kann, bei dem die Reifenbreite im Fuss kleiner ist als die Breite der Lauffläche bzw. die Breite des Fusses auf der ersten Kernform.

Nach einer bevorzugten Durchführungsform der Erfindung werden die Changierung und die Kernrotation so gesteuert, dass ausserdem ein oder mehrmals die Changierbreite eingeschränkt und dabei die Changiergeschwindigkeit herabgesetzt wird, so dass eine zusätzliche Verstärkung in Umfangsrichtung in Form einer Laufflächenarmierung gebildet wird.

Die Ausbildung der Armierung gemäss dem neuen Verfahren ist in der Zeichnung dargestellt und im folgenden beispielhaft näher beschrieben.

Es zeigen:

Figur 1 einen Querschnitt durch einen Balg als Kern mit sich erweiternden Flanken;

Figur 2 einen Querschnitt durch einen teilbaren Kern mit geraden Flanken;

Figur 3 eine Seitenansicht der Bewicklung des Kerns nach Figur 2 nach einer Umdrehung;

Figur 4 einen Ausschnitt einer auf den Kern einer Giessform liegenden, separat nach Figur 1 hergestellten Armierung;

Figur 5 einen Ausschnitt eines armierten Reifens in einer Giessform.

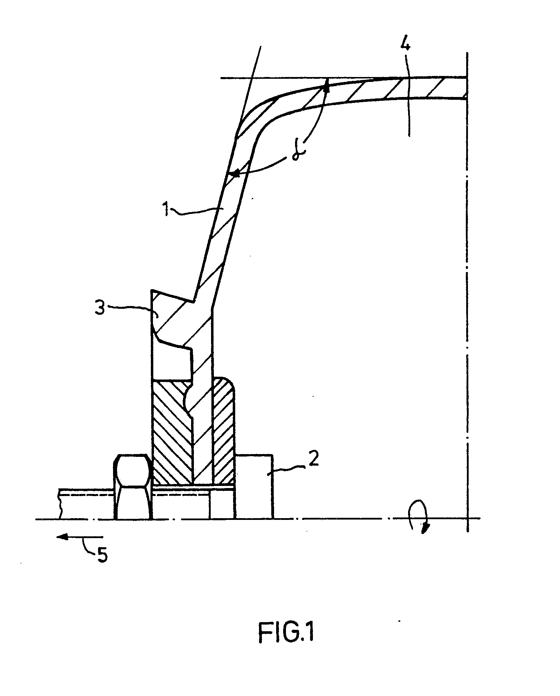

Eine Form, auf der eine solche Armierung herstellbar ist, zeigt Figur 1. Der elastische Balg 1 ist in eine Drehvorrichtung 2 eingespannt. Abweichend von den üblichen Kernen sind der Wulst 3 und der Winkel $\alpha > 90°$. Der Wulst 3 ist an einer solchen Stelle rotationssymmetrisch am Balg 1 befestigt, wo beim fertigen konventionellen Reifen näherungsweise der Wulstdraht liegen würde. Es hat sich gezeigt, dass ein hochwertiger präziser Balg 1 erforderlich ist; andererseits lassen sich aber erhebliche Materialeinsparungen am Reifen erzielen. Zur Erhöhung der Stabilität wird der Balg mit Flüssigkeit 4 gefüllt. Der Kern kann auch zur Bildung der inneren Kontur beim Reifenguss verwendet werden. Durch Auseinanderziehen der Balgbefestigung in Achsrichtung 5 wird die Armierung bzw. der Reifen entformt.

Bevorzugt wird ein solcher Balg 1 aus zwei Halbschalen durch Reibungsverschweissung hergestellt. Das Balgelastomer wird beispielsweise aus einem Prepolymer und einem Kettenverlängerer gebildet. Das Prepolymer ist aufgebaut aus 1 Mol Polyester auf Basis von Adipinsäure, Ethylenglykol, im Molgewicht 2000 und 2 Mol 2,4-Toluylendiisocyanat. Der NCO-Gehalt ist 3,6%. Dieses Prepolymer wird mit 10% Propylencarbonat verdünnt. Dabei ergeben sich folgende Daten:

| | |
|---|---|
| NCO-Gehalt: | 3,25% |
| Viskosität bei 80°C: | 800 bis 1000 mPa.s. |

Der Kettenverlängerer besteht aus 90 Gew.-Teilen Polyester aus Adipinsäure/Ethylenglykol/Butandiol, MG 2000, 10 Gew.-Teilen 3,3',5,5'-Tetraethyl-4,4'-diaminodiphenylmethan und 0,3 Gew.-Teilen Diazabicyclooctan.

100 Gew.-Teile des Prepolymer/Propylencarbonat-Gemisches werden bei 80°C mit 48 Gew.-Teilen des auf 50°C temperierten Kettenverlängerers vermischt. Die Formtemperatur beträgt 80°C. Die Verarbeitungszeiten bei Rührwerksvermischung betragen:

| | |
|---|---|
| Giesszeit: | ca. 10 sec. |
| Formzeit: | ca. 20 Min. |
| Nachheizzeit: | 12 h/80°C |

Die Formulierung kann auch auf Hochdruck-Dosier/Mischaggregaten verarbeitet werden.

Mechanische Eigenschaften

| | |
|---|---|
| Zugversuch $\sigma$ 100: | 2,83 MPa |
| $\sigma$ B: | 46,7 MPa |
| $\varepsilon$ B: | 700% |
| Weiterreissfestigkeit: | 39,4 KN/m |
| Druckverformungsrest (24 h/70°C): | 22% |
| Stosselastizität: | 53% |
| Härte: | 74 Shore A |

Balgherstellung:

Aus der vorgenannten Reaktionsmischung werden im Reaktionsgiessverfahren Halbschalen hergestellt. Diese Halbschalen besitzen in den Ringflächen 1 mm Aufmass als Reibschweisszugabe. Mit einer Drehzahl von 180 Umdrehungen/min werden die beiden Halbschalen ca. 120 sec unter Kompression von 1,5 mm aufeinandergedrückt. Unmittelbar nach Beendigung dieses Reibungsvorganges wird eine weitere Zusammendrückung von 0,5 mm vorgenommen.

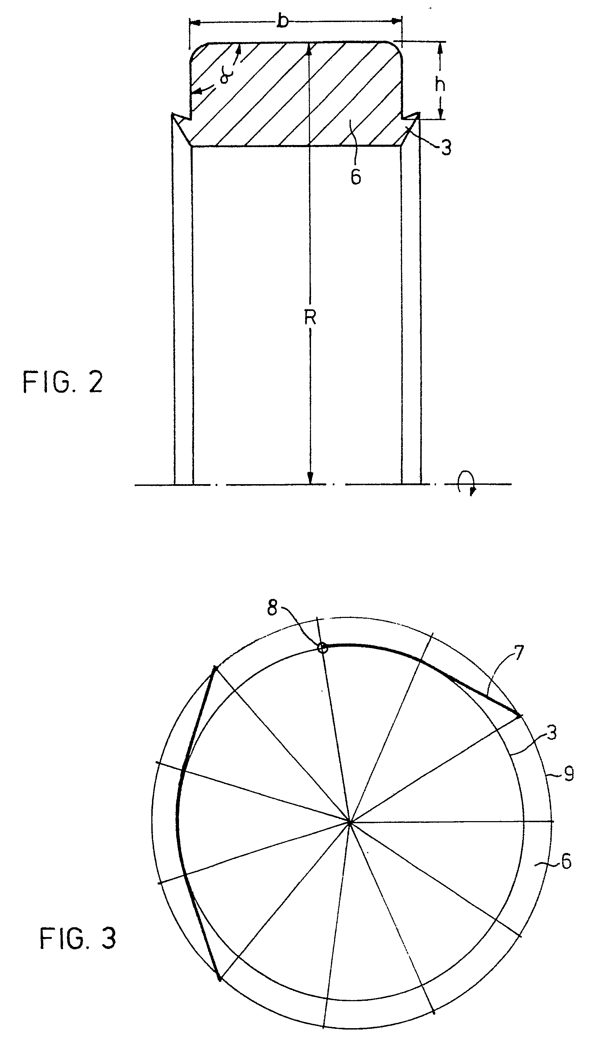

Ein anderer Kernquerschnitt bei einem teilbaren Metallkern 6 ist in Figur 2 dargestellt. Dort ist der Grenzfall angegeben, wo die Breite der Armierung im Reifenfuss näherungsweise gleich der Laufflächenbreite ist, d.h. α ist näherungsweise 90°. Die Breite b der Lauffläche beträgt 100 mm, die Höhe h vom Kerngerüst bis zur Lauffläche 37 mm, der maximale Kernradius R 240 mm.

Die erste Lage des Cordfadens, mit der ein solcher Kern gemäss Figur 2 bewickelt worden ist, zeigt Figur 3. Der Kern 6 ist in elf gleiche Segmente aufgeteilt. Der ummantelte Cordfaden 7 wird an einer Teilungsstelle 8 am Kernwulst 3 befestigt. Man führt ihn im Verlauf des ersten Segments auf dem Umfang der Kernwulstes 3 aufliegend. Mit Beginn des zweiten Segmentes verlässt der Cordfaden 7 den Kernwulst 3 und tritt zu Beginn des dritten Segmentes am Rand zur Kernumfangsfläche 9 ein. Im dritten Segment überfährt der Cordfaden 7 den Kern 6 und wird mit Beginn des vierten Segmentes wieder auf die Seitenfläche des Kerns 6 umgelegt. Ab dem fünften Segment nähert sich der Cordfaden 7 wieder tangential dem anderen Kernwulst 3, um im Verlauf des fünften Segments am Kernwulst 3 aufzuliegen und ihn einmal zu umrunden. Von da an wiederholt sich der Vorgang in wechselnder Richtung (changierend).

Nach acht vollständigen Umdrehungen des Kerns käme es theoretisch zu einer Überdeckung des bei der ersten Kerndrehung gelegten Cordfadens 7. Da jedoch eine gleichmässige Verteilung des Cordfadens 7 erreicht werden soll, wird der Cordfaden 7 geringfügig über eine Teilungsstelle 8 hinausgeführt, beispielsweise um einen Abstand von 2 bis 3 Fadenbreiten. In dieser Weise wird die Wicklung fortgesetzt, bis der ganze Kern 6 mit einem gleichmässigen Gitterwerk bedeckt ist.

Es wird hier ein Stahlcordfaden verwendet, der durch Extrusion mit einem thermoplastischen Polyurethanelastomer, z.B. Desmopan® 385 oder Desmopan® 485 der Bayer AG, ummantelt ist.

Der Cordfaden wurde ausserdem noch im Tauchverfahren mit einer Klebstofflösung imprägniert, z.B. Desmocoll® 12 oder Desmocoll® 20 der Bayer AG, beide vernetzt mit einem Isocyanat, z.B. Desmodur® R oder Desmodur® RF der Bayer AG, oder mit einer PUR-Dispersion, z.B. Impranil® DLN der Bayer AG. Bei der Wicklung besitzt der Cordfaden noch eine leichte Klebrigkeit; nach der Trocknung hat die Cordarmierung eine so hohe Stabilität, dass sie ohne Beschädigung vom Kern 6 abgenommen werden konnte.

Bei einer speziell verstärkten Armierung wird wie oben begonnen, zusätzlich werden aber mit dem gleichen Faden ein Bündel von 20 Windungen auf den einen Kernwulst, dann im Bereich der Lauffläche spiralig im Zweifadenabstand ein Gürtel und anschliessend nochmals 20 Windungen auf den anderen Kernwulst gewickelt. Nach Verfestigung der anfänglich klebrigen Imprägnierung wird eine formstabile Armierung erhalten, die durch den zusätzlichen Gürtel und durch die Cordfadenbündel im Wulstbereich an kritischen Stellen besonders verstärkt ist.

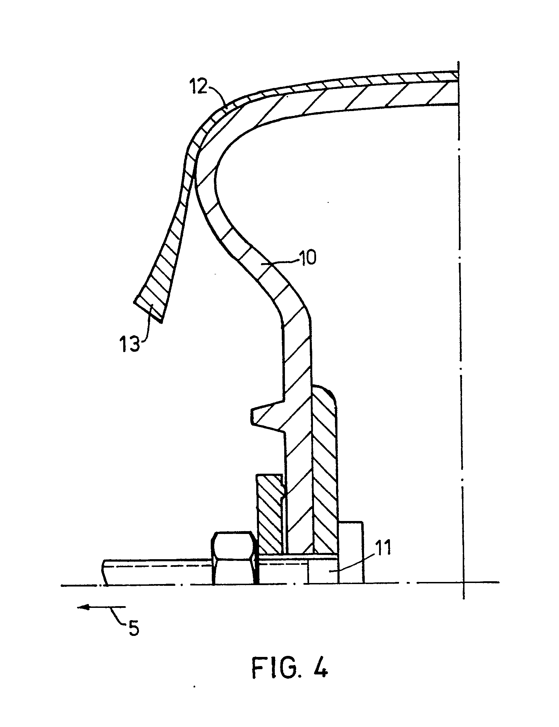

Bei einer Fixierung des Cordfadens kann die Armierung von der Kernform abgenommen werden. Die Weiterverarbeitung einer Armierung, die auf einem Kern gemäss Fig. 1 (α > 90°) hergestellt worden ist, zeigt Figur 4. Die Kernform für den Giessreifen besteht hier aus einem armierten Balg 10, der an einer Rotationsvorrichtung 11 eingespannt ist. Die in sich stabile Armierung 12 mit dem für die Erfindung typischen verdickten Fussbereich 13 liegt zunächst nicht im Fussbereich am Balg 10 an.

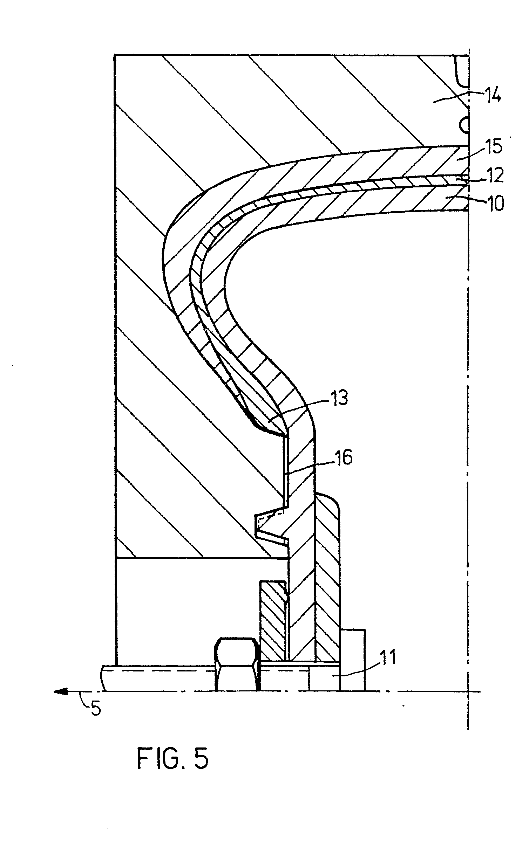

Erst im Zusammenwirken mit der äusseren Giessform 14 in Figur 5 erkennt man den üblichen Reifenquerschnitt; der Bereich, der überwiegend mit den Reifenelastomeren gefüllt ist, ist mit 15 bezeichnet. Obwohl es in der Darstellung in Figur 5 nicht deutlich zu erkennen ist, ist der Bereich unmittelbar am Kern 10 unter der Armierung sowie im Reifenfuss vollständig mit Elastomeren umhüllt und durchdrungen.

Zur blasenfreien Herstellung des Reifens ist eine sorgfältige Entlüftung über Kanäle 16 in den Berührungsflächen am Balg und Kern erforderlich. Die Form steht beim Guss vertikal; der Anguss erfolgt über einen Filmanschnitt von unten. Die Entlüftung geschieht im Zenit durch vertikal angeordnete und in der Trennebene als Hochstelle auslaufende Stege, welche die Hochstellen der Profile anschneiden.

Nach dem neuen Verfahren werden Reifen unter Verwendung von PUR-Giesselastomeren hergestellt, wie sie z.B. im Kunststoff-Handbuch, Bd. VII, Polyurethane, 1966, Carl Hanser Verlag, beschrieben sind.

Beispiel 1

Verkupferter Stahlcord der Konstruktion 5 × 0,25 wird durch eine Klebstofflösung aus Impranil® DLN gezogen und anschliessend getrocknet.

Auf einen Kern, ähnlich wie in Fig. 2, der Breite 100 mm, der Höhe vom Kerngerüst bis zur Lauffläche von 60 mm und einem maximalen Kerndurchmesser von 450 mm wird der so vorbehandelte Stahlcord aufgewickelt.

Im linken Wulstdrahtbereich wird der Stahlcord in einer Öse befestigt. Der Kern wird in Rotation versetzt. Während 10 Umdrehungen wird der Cord im linken Wulstdrahtbereich geführt. Anschliessend wird die Fadenführung in den rechten Wulstdrahtbereich verlegt, wiederum für 10 Umdrehungen.

Bei gleichmässiger Rotation des Kerns wird der Cordfaden derart geführt, dass er in den Extrempositionen (rechter und linker Wulstdrahtbereich) jeweils für eine halbe Umdrehung verweilt und zwischendurch jeweils über die Kernaussenkontur verläuft. Der Vorschub in Umlaufrichtung (kernmittig) beträgt jeweils 5 mm. Es ergibt sich hierdurch eine rautenförmige Armierung.

Nach erfolgter Umhüllung des gesamten Kerns mit dieser rautenförmig erscheinenden Armierung wird die Fadenführung bei konstanter Drehzahl des Kerns mit einem axialen Vorschub von 1,2 mm pro Umdrehung vorgenommen.

Hierdurch wird im Wulstbereich eine zusätzliche Armierung geschaffen und im Laufflächenbereich eine Gürtelarmierung realisiert. Nach erfolgter Belegung des Reifens über die gesamte Breite wird die Rotation beendet, der Stahlcord durchschnitten und das Cordende in der Armierung des Wulstdrahtbereiches durch Verknotung befestigt.

Der solchermassen armierte Kern wird in die Giessform gemäss Fig. 5 eingesetzt und die Form wird mit dem Giess-PUR-Reaktionsgemisch ausgefüllt.

Beispiel 2

Es wird eine Armierung eingesetzt, bestehend aus einem Polyestercord der Konstruktion dtex 1100 × 3 × 3, ummantelt mit thermoplastischem PUR-Elastomer Desmopan® 384 in der Dicke von 2 mm Durchmesser sowie aus einem verkupferten Stahlcord der Konstruktion 3 + 9 × 0,175 + 0,15, mit Impranil® DLN benetzt.

Es wird der Kern der Dimension analog Beispiel 1 verwendet.

Der ummantelte Polyestercord wird im Wulstbereich befestigt, der Kern in Rotation versetzt und die Fadenführung changierend so vorgenommen, dass ein Rautenmuster mit einer Seitenlänge von 8 mm entsteht. Nach gleichmässiger Belegung des Kernes wird die Rotation beendet, der ummantelte Polyestercord im Wulstbereich abgeschnitten und befestigt und anschliessend in gleicher Weise wie in Beispiel 1 der Stahlcordfaden geführt:

Jeweils zehn Umdrehungen im Wulstbereich links und rechts, dann changierend mit vier Rautenseitenlängen im Zenit und jeweils im Wulstbereich je eine halbe Umdrehung verharrend und zuletzt im Laufflächenbereich eine spiralförmige Wicklung über die gesamte Breite mit einer Steigerung von 2 mm.

Das Cordende wird wiederum im Wulstdrahtbereich befestigt.

**Patentansprüche**

1. Verfahren zur Herstellung eines mit ummantelten Cordfäden (7) armierten Giessreifens, bei dem zunächst die Reifenarmierung (12) vorgefertigt wird, indem ein Endloscordfaden (7) changierend auf einen Kern (6, 10) gewickelt wird, wobei die Changierung so gesteuert wird, dass in den Wendepunkten der Changierung der Endloscordfaden (7) eine Zeitlang im Bereich des Reifenfusses (13) rotationssymmetrisch geführt wird, gekennzeichnet durch folgende Verfahrensschritte:

a) der Endloscordfaden (7) wird auf einen rotierenden Kern (6, 10) mit sich nicht verengenden Flanken gewickelt;

b1) entweder wird der umwickelte Kern (6, 10) zur Kerninnenkonturbildung des Giessreifens verwendet, oder

b2) die Reifenarmierung (12) wird nach einer Fixierung von dem Kern (6, 10) abgenommen und in eine Reifengiessform (14) eingelegt;

c) die Changierung wird so gesteuert, dass wenigstens einmal auf jeder Seite in den Wendepunkten der Changierung der Endloscordfaden (7) mindestens eine Umdrehung lang an einen rotationssymmetrisch im Bereich des Reifenfusses (13) am Kern (6, 10) angebrachten Wulst (3) gedrückt wird.

2. Verfahren nach Anspruch 1, dadurch gekennzeichnet, dass die Changierung und die Kernrotation so gesteuert werden, dass ausserdem ein oder mehrmals die Changierbreite eingeschränkt und dabei die Changiergeschwindigkeit herabgesetzt wird, so dass eine zusätzliche Verstärkung in Umfangsrichtung in Form einer Laufflächenarmierung (12) gebildet wird.

**Claims**

1. Process for the production of a cast tyre reinforced with sheathed cord threads (7) in which first of all the tyre reinforcement (12) is prefabricated by winding a continuous cord thread (7) in an alternating manner on to a core (6, 10), the alternation being controlled in such a manner that, at the turning points of the alternation, the continuous cord thread (7) is guided for a certain time in a rotationally symmetric manner in the region of the tyre foot (13), characterised by the following process steps:

a) the continuous cord thread (7) is wound on to a rotating core (6, 10) with non-narrowing flanks;

b1) either the wound core (6, 10) is used to form the core internal contour of the cast tyre, or

b2) the tyre reinforcement (12) is removed from the core (6, 10) after a fixing operation and is introduced into a tyre-casting mould (14);

c) the alternation is controlled in such a manner that, at the turning points of the alternation, the continuous cord thread (7) is pressed at least once on each side for the duration of at least one rotation against a bead (3) provided in a rotationally symmetric manner on the core (6, 10) in the region of the tyre foot (13).

2. Process according to Claim 1, characterised in that the alternation and the rotation of the core are controlled in such a manner that the alternation width is also restricted once or several times and, in so doing, the alternating speed is reduced, so that an additional reinforcement is formed in the circumferential direction in the form of a tread reinforcement (12).

**Revendications**

1. Procédé pour fabriquer un pneumatique du type obtenu par coulée, qui est armé de câbles (7) enduits ou enrobés, selon lequel on préfabrique d'abord l'armature de renforcement (12) du pneu par enroulement d'un câblé soupe continu (7) selon un mouvement alternatif sur un noyau (6, 10), en commandant le mouvement alternatif de manière que, aux points de rebroussement de ce mouvement, le câblé continu (7) soit guidé pendant un laps de temps dans la zone du talon (13) du pneu, suivant une disposition à symétrie de révolution, caractérisé en ce que:

a) on enroule le câblé continu (7) sur un noyau (6, 10) tournant, possédant des flancs qui ne se rétrécissent pas;

b1) soit on utilise le noyau (6, 10) bobiné pour former le contour intérieur du noyau du pneu coulé, soit

b2) on retire du noyau (6, 10) l'armature de pneu (12) ainsi formée, après un fixage, et on la dispose dans un moule (14) pour la coulée du pneu; et

c) on commande le mouvement alternatif de manière que le câblé continu (7) soit pressé, au moins une fois sur chaque côté, aux points de rebroussement du mouvement alternatif, pendant au moins un tour, contre un bourrelet (3) agencé à symétrie de révolution sur le noyau (6, 10) dans la zone du talon (13) du pneu.

2. Procédé selon la revendication 1, caractérisé en ce que l'on commande le mouvement alternatif du câblé et la rotation du noyau de manière que, en plus, la largeur sur laquelle s'effectue ce mouvement soit limitée une ou plusieurs fois, avec réduction de la vitesse du mouvement alternatif, si bien qu'un renforcement supplémentaire sous forme d'une armature de bande de roulement (12) est formée dans le sens circonférentiel.

FIG.1

0 129 183

FIG. 2

FIG. 3

FIG. 4

FIG. 5